# EUROPEAN PATENT SPECIFICATION

(11) **EP 2 584 742 B1**
(45) Date of publication and mention of the grant of the patent: **03.02.2016**
(21) Application number: 12183879.1
(22) Date of filing: 11.09.2012
(51) Int. Cl.: H04L 12/46

(54) **Method and switch for sending packet**
Verfahren und Schalter zum Senden von Paketen
Procédé et commutateur d'envoi de paquets

(30) Priority: 18.10.2011 CN 201110316270
(43) Date of publication of application: 24.04.2013
(73) Proprietor: Huawei Technologies Co., Ltd., Longgang District Shenzhen, Guangdong 518129 (CN)
(72) Inventor: Tan, Zhaoyuan, 518129 Shenzhen (CN)
(74) Representative: Epping - Hermann - Fischer

(56) References cited:
- US-A1- 2002 052 972
- US-A1- 2007 274 321
- US-B1- 6 914 905

## Description

### FIELD OF THE INVENTION

The present invention relates to the field of computer network technologies, and in particular, to a method and switch for sending a packet.

### BACKGROUND OF THE INVENTION

At present, a layer 3 switch is usually adopted to accelerate data exchange inside a VLAN (Virtual Local Area Network). The layer 3 switch may serve as a gateway of a user, and implement high-speed forwarding of a layer 3 data packet in an OSI (Open Systems Interconnection Reference Model) network model.

In order to implement high-speed forwarding of layer 3 data packets, when VLANs are built, the layer 3 switch needs to configure a VLAN IF (a logical port of a virtual local area network) which corresponds to each VLAN, and allocate a corresponding IP (Internet Protocol) network segment for each configured VLAN IF, where each of the allocated IP network segments correspondingly keeps one IP address as a broadcast address of this IP network segment. It can be known from the foregoing description that, since each VLAN is correspondingly allocated with a corresponding IP network segment, and each IP network segment correspondingly keeps one IP address as the broadcast address of this IP network segment, when the number of VLANs is relatively large, a lot of IP addresses may be wasted.

In the prior art, in order to solve the problem of the waste of IP addresses, VLAN aggregation technology is proposed. Multiple VLANs are aggregated into one aggregated VLAN; and afterwards, a VLAN IF is allocated only for the aggregated VLAN obtained by aggregation, and an IP network segment corresponding to the VLAN IF is allocated, where the IP network segment keeps one IP address as the broadcast address of this IP network segment. It can be seen that, after the processing of the VLAN aggregation technology, the layer 3 switch only allocates one IP network segment for the VLANs, and the IP network segment only keeps one IP address as the broadcast address, thereby effectively preventing the waste of the IP addresses.

In the aggregated VLAN, when the layer 3 switch needs to send a packet, for example, an ARP (Address resolution protocol, address resolution protocol) request packet, to a certain connected user, because the layer 3 switch does not know a specific VLAN which corresponds to the IP address of the user, the layer 3 layer 3 switch needs to replicate the packet in all the VLANs, and then sends each replicated packet to each VLAN, respectively. For example, in order that the layer 3 switch obtains ARP information of all connected users, the number of packets that the layer 3 switch needs to send is: the number of VLANs in VLAN aggregation x the number of all the connected users. However, one user only belongs to one VLAN. Therefore, (the number of VLANs in VLAN aggregation -1) x the number of all the connected users) packets are invalid packets, which may seriously affect processing performance of the layer 3 switch, and these invalid packets may further cause a processing burden for the network and other devices in the network.

US 6,914,905 B1 describes a method and system for a VLAN aggregation architecture in which several VLANs in a network share the same default router address and subnet mask, but remain isolated from one another's network traffic. Instead of the traditional method of assigning one subnet to a VLAN, each VLAN is assigned only a portion of a subnet's IP address space, and is further grouped into super-VLAN uniquely associated with that subnet. Intra-VLAN traffic is forwarded only to host IP addresses assigned to the same VLAN according to a VLAN identifier carried in the data packet. Inter-VLAN traffic is processed by a virtual router interface which routes the data packet by applying the routing configuration for the subnet uniquely associated with the super-VLAN, according to a super-VLAN identifier carried in the data packet.

US 2007/274321 A1 describes a VLAN Mapping Point, which enables an end user to simultaneously access multiple services through a single broadband connection. The VLAN Mapping Point is implemented at a border between first and second independently tagged VLAN regions, and includes a mapping function that receives traffic packets from each of the VLAN regions, maps VLAN tags in the packets to associated VLAN tags for the other VLAN region, and forwards the packets using the associated VLAN tags. The first VLAN region may be a last-mile network that connects to end users, and the second VLAN region may be an aggregation network that connects to a core network.

US 2002/0052972 A1 describes a communication method among a plurality of virtual LANs in an IP subnet. If a switching router receives a broadcast packet from a source host, it transmits the broadcast packet to all the virtual LANs to which the source host is included as well as to another virtual LAN to which a destination host is included, and thus a broadcast domain can be formed through the virtual LANs on the identical IP subnet.

### SUMMARY OF THE INVENTION

In order to avoid sending of invalid packets and improve sending performance of a packet in an aggregated VLAN scenario, embodiments of the present invention provide a method and switch for sending a packet. The technical solutions are as follows.

According to a first aspect of the present invention, a method for sending an address resolution protocol, ARP, request packet is provided, where the method is performed by a layer 3 switch configured with an aggregated virtual local area network, VLAN, the aggregated VLAN has a VLAN identifier, VLAN ID, and contains a plurality of VLANs, and the method includes:
searching correspondence between IP address information and the VLANs in the aggregated VLAN according to a destination Internet protocol (IP) address in the ARP request packet, so as to determine if there is a VLAN in the aggregated VLAN that corresponds to the destination IP address;
if a VLAN in the aggregated VLAN that corresponds to the destination IP address is obtained, sending the ARP request packet to only the obtained VLAN in the aggregated VLAN;
if a VLAN in the aggregated VLAN that corresponds to the destination IP address cannot be obtained, sending the ARP request packet to all VLANs in the aggregated VLAN.

According to a first implementation of the first aspect, the IP address information includes an IP address segment, and the searching the correspondence between the IP address information and the VLANs in the aggregated VLAN according to the destination Internet protocol (IP) address in the ARP request packet includes: determining an IP address segment to which the destination IP address belongs, and searching correspondence between IP address segments and the VLANs in the aggregated VLAN according to the determined IP address segment. The method further includes a step of configuring and saving the correspondence between the IP address segments and the VLANs in the aggregated VLAN.

According to a second implementation of the first aspect, the IP address information includes an IP address pool, and the searching the correspondence between the IP address information and the VLANs in the aggregated VLAN according to the destination Internet protocol (IP) address in the ARP request packet includes: determining an IP address pool to which the destination IP address belongs, and searching correspondence between IP address pools and the VLANs in the aggregated VLAN according to the determined IP address pool. The method further includes a step of obtaining the correspondence between the IP address pools and the VLANs in the aggregated VLAN from a dynamic host configuration protocol server and saving the correspondence.

According to a third implementation of the first aspect, the IP address information includes an IP address, and the searching the correspondence between the IP address information and the VLANs according to the destination Internet protocol (IP) address in the ARP request packet includes: searching correspondence between IP addresses and the VLANs in the aggregated VLAN according to the destination IP address. The method further includes a step of intercepting an Offer packet sent by a dynamic host configuration protocol server, and obtaining the correspondence between the IP addresses and the VLANs in the aggregated VLAN from the Offer packet and saving the correspondence.

According to a second aspect of the present invention, a layer 3 switch is provided, where the switch is configured with an aggregated VLAN, the aggregated VLAN has a VLAN identifier, VLAN ID, and contains a plurality of VLANs, and the switch includes: a searching module and a transmitter;
the searching module is configured to, search correspondence between IP address information and the VLANs in the aggregated VLAN according to a destination Internet protocol (IP) address in an address resolution protocol, ARP, request packet, so as to determine if there is a VLAN in the aggregated VLAN that corresponds to the destination IP address; and
the transmitter is configured to, if the searching module obtains a VLAN in the aggregated VLAN that corresponds to the destination IP address send the ARP request packet to only the obtained VLAN in the aggregated VLAN; and if a VLAN in the aggregated VLAN that corresponds to the destination IP address cannot be obtained, sending the ARP request packet to all VLANs in the aggregated VLAN.

According to a first implementation of the second aspect, the searching module includes: a first searching unit, configured to, when the IP address information is an IP address segment, determine an IP address segment to which the destination IP address belongs, and search correspondence between IP address segments and the VLANs in the aggregated VLAN according to the determined IP address segment. The switch further includes a first obtaining module, configured to configure and save the correspondence between the IP address segments and the VLANs in the aggregated VLAN.

According to a second implementation of the second aspect, the searching module includes: a second searching unit, configured to, when the IP address information is an IP address pool, determine an IP address pool to which the destination IP address belongs, and search correspondence between IP address pools and the VLANs in the aggregated VLAN according to the determined IP address pool. The switch further includes a second obtaining module, configured to obtain the correspondence between the IP address pools and the VLANs in the aggregated VLAN from a dynamic host configuration protocol server and save the correspondence.

According to a third implementation of the second aspect, the searching module includes: a third searching unit, configured to, when the IP address information is an IP address, search correspondence between IP addresses and the VLANs in the aggregated VLAN according to the destination IP address. The switch further includes a third obtaining module, configured to intercept an Offer packet sent by a dynamic host configuration protocol server, and obtain the correspondence between the IP addresses and the VLANs in the aggregated VLAN from the Offer packet and save the correspondence.

In the embodiments of the present invention, with the implementation of the technical solutions that correspondence between IP address information and virtual local area networks is searched according to a destination Internet protocol (IP) address in an ARP request packet, and when a virtual local area network corresponding to the destination IP address is obtained by searching according to the destination IP address, the ARP request packet is sent to the virtual local area network, and otherwise, the ARP request packet is sent to all the virtual local area networks. The number of invalid packets that are sent can be effectively reduced, and sending performance of the ARP request packet in an aggregated VLAN scenario is improved, thereby reducing an influence of the invalid packets on the whole virtual local area network.

### BRIEF DESCRIPTION OF THE DRAWINGS

To illustrate the technical solutions according to the embodiments of the present invention more clearly, the accompanying drawings required for describing the embodiments are briefly introduced in the following. Apparently, the accompanying drawings in the following description are only some embodiments of the present invention, and persons skilled in the art may further derive other accompanying drawings according to these accompanying drawings without making creative efforts.
FIG. 1 is a flow chart of a method for sending a packet according to Embodiment 1 of the present invention;
FIG. 2 is a schematic diagram of networking of an aggregated VLAN connected by layer 3 switches, which corresponds to Embodiment 2 of the present invention;
FIG. 3 is a flow chart of a method for sending a packet according to Embodiment 2 of the present invention;
FIG. 4 is a flow chart of a method for sending a packet according to Embodiment 2 of the present invention;
FIG. 5 is a schematic diagram of networking of an aggregated VLAN connected by layer 3 switches, which corresponds to Embodiment 2 of the present invention;
FIG. 6 is a flow chart of a method for sending a packet according to Embodiment 2 of the present invention;
FIG. 7 is a flow chart of a method for sending a packet according to Embodiment 2 of the present invention;
FIG. 8 is a switch according to Embodiment 3 of the present invention; and
FIG. 9 is a switch according to Embodiment 3 of the present invention.

### DETAILED DESCRIPTION OF THE EMBODIMENTS

To make the objectives, technical solutions, and advantages of the present invention clearer, implementation manners of the present invention are further described in detail in the following with reference to the accompanying drawings.

### Embodiment 1

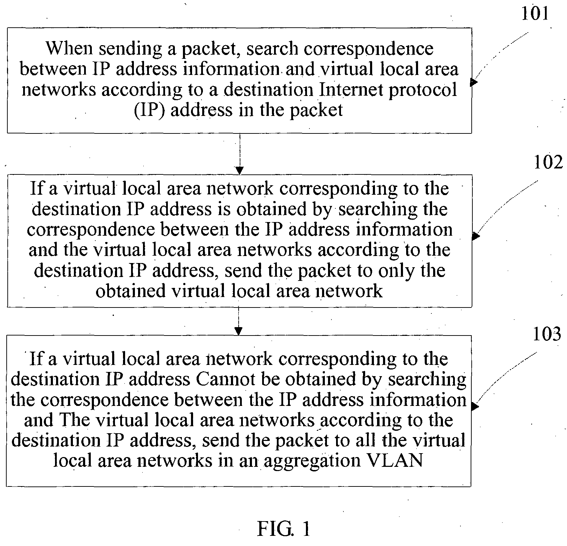

Referring to FIG. 1, a method for sending a packet is shown. The method is as follows:
Step 101: When sending a packet, search correspondence between IP address information and virtual local area networks according to a destination Internet protocol (IP) address in the packet.
Step 102: If a virtual local area network corresponding to the destination IP address is obtained by searching the correspondence between the IP address information and the virtual local area networks according to the destination IP address, send the packet to only the obtained virtual local area network.
Step 103: If a virtual local area network corresponding to the destination IP address cannot be obtained by searching the correspondence between the IP address information and the virtual local area networks according to the destination IP address, send the packet to all the virtual local area networks in an aggregated VLAN.

In the embodiment of the present invention, with the implementation of the technical solutions that correspondence between IP address information and virtual local area networks is searched according to a destination Internet protocol (IP) address in a packet, and when a virtual local area network corresponding to the destination IP address is obtained by searching according to the destination IP address, the packet is sent to the virtual local area network, and otherwise, the packet is sent to all the virtual local area networks. The number of invalid packets that are sent may be effectively reduced, and sending performance of the packet in an aggregated VLAN scenario is improved, thereby reducing an influence of the invalid packets on the whole virtual local area network.

### Embodiment 2

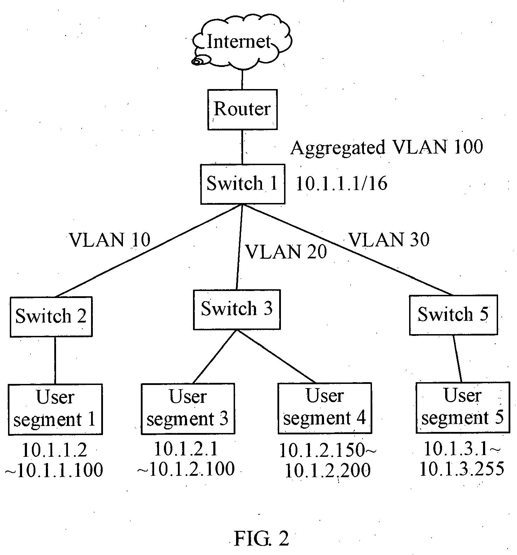

Referring to FIG. 2, it is a schematic diagram of networking of an aggregated VLAN connected by layer 3 switches, which corresponds to an embodiment of the present invention. The aggregated VLAN shown in FIG. 2 includes three virtual local area networks, which are VLAN 10, VLAN 20, and VLAN 30, that is, the VLAN 10, the VLAN 20, and the VLAN 30 all join an aggregated VLAN 100. The aggregated VLAN 100 is correspondingly configured with a VLAN IF (a logical port of the virtual local area network). The VLAN 10, the VLAN 20 and the VLAN 30 and the aggregated VLAN 100 are connected by layer 3 switches 2, 3, 5, and 1, respectively, layer 3 switch 1 is configured with the aggregated VLAN 100.

In the embodiment of the present invention, a network administrator of the aggregated VLAN network may statically configure one or more corresponding IP network segments for the aggregated VLAN and each virtual local area network in the aggregated VLAN, where the IP network segment corresponding to the aggregated VLAN includes the IP network segment corresponding to each virtual local area network in the aggregated VLAN. In a case of statically configuring the IP network segment in the foregoing, when a user device joins a certain VLAN, the network administrator may select an unoccupied IP address from the IP network segment corresponding to the VLAN and statically allocate the IP address to the newly joined user device.

Referring to FIG. 2, an IP network segment allocated for the VLAN 10 by the network administrator is 10.1.1.2 to 10.1.1.100, IP network segments allocated for the VLAN 20 are 10.1.2.1 to 10.1.2.100 and 10.1.2.150 to 10.1.2.200, an IP network segment allocated for the VLAN 30 is 10.1.3.1 to 10.1.3.255, and an IP network segment allocated for the aggregated VLAN 100 is 10.1.1.1/16. In this way, when a user device 1 joins the VLAN 10 network, the network administrator may select an IP address, for example, 10.1.1.5, from 10.1.1.2 to 10.1.1.100 and allocate the IP address to the user device 1.

In the embodiment of the present invention, a layer 3 switch may implement high-speed forwarding of a layer 3 data packet in an OSI network model. A layer 3 in the OSI network model refers to a network layer. In the aggregated VLAN, a packet forwarded by the layer 3 switch usually includes content such as a source IP address, a destination IP address, and aggregated VLAN information. When the layer 3 switch forwards a packet, the packet is forwarded, according to the destination IP address in the forwarded packet, to a user device identified by the destination IP address, thereby implementing the high-speed forwarding of the layer 3 data packet.

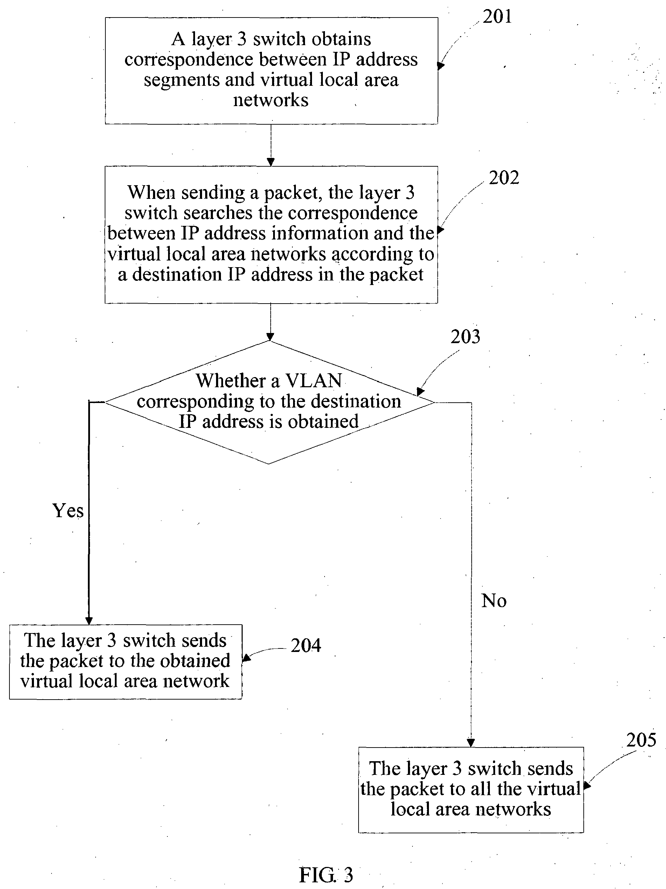

For a case that the IP address of the user device in the VLAN is statically allocated, the embodiment of the present invention provides a method for sending a packet, and the method for sending the packet is applicable to the aggregated VLAN shown in FIG. 2. In addition, referring to FIG. 3, the following steps are included:
Step 201: The layer 3 switch which is configured with an aggregated VLAN obtains correspondence between IP address information and virtual local area networks. In the embodiment of the present invention, the correspondence between the IP address information and the virtual local area networks is correspondence between IP address segments and the virtual local area networks, and IP addresses in an IP address segment may be continuous IP addresses.

The obtaining, by the layer 3 switch, the correspondence between the IP address information and the virtual local area networks includes: configuring and saving, by the layer 3 switch, the correspondence between the IP address segments and the virtual local area networks.

In specific implementation of this step, the layer 3 switch provides a configuration interface and provides a corresponding configuration command for a user, so that the user can configure the correspondence between the IP address segments and the virtual local area networks through the configuration command provided by the layer 3 switch; and through the configuration interface, the layer 3 switch receives the correspondence which is between the IP address segments and the virtual local area networks and is configured by the user, and saves the correspondence which is between the IP address segments and the virtual local area networks and is configured by the user. The user here mainly refers to the network administrator.

In the embodiment of the present invention, the correspondence which is between the IP address segments and the virtual local area networks and is configured by the user and is saved by the layer 3 switch may be shown in Table 1.

**Table 1: Correspondence between IP address segments and virtual local area networks**

| **IP Address Segment** | **Virtual Local Area Network** |
|---|---|
| 10.1.1.2 to 10.1.1.100 | VLAN 10 |
| 10.1.2.1 to 10.1.2.100 | VLAN 20 |
| 10.1.2.150 to 10.1.2.200 | |
| 10.1.3.1 to 10.1.3.100 | VLAN 30 |
| ... | ... |

In the embodiment of the present invention, the layer 3 switch allows the user to modify, for a second time, the correspondence which is between the IP address segments and the virtual local area networks and is configured by the user, and at the same time, the layer 3 switch updates its saved correspondence between the IP address segments and the virtual local area networks according to the modification of the user.

Step 202: When sending a packet, the layer 3 switch searches the correspondence between the IP address information and the virtual local area networks according to a destination IP address in the packet.

The layer 3 switch determines an IP address segment to which the destination IP address belongs, and searches the correspondence between the IP address segments and the virtual local area networks according to the determined IP address segment.

Step 203: The layer 3 switch judges whether a virtual local area network corresponding to the destination IP address is obtained by searching the correspondence between the IP address information and the virtual local area networks according to the destination IP address in the packet.

If the virtual local area network corresponding to the destination IP address is obtained by searching the correspondence between the IP address information and the virtual local area networks according to the destination IP address, execute step 204.

If the virtual local area network corresponding to the destination IP address cannot be obtained by searching the correspondence between the IP address information and the virtual local area networks according to the destination IP address, execute step 205.

For example, if the packet forwarded by the layer 3 switch is an ARP request packet, and the destination IP address in the packet is 10.1.2.180, the layer 3 switch searches the stored correspondence between IP address segments and virtual local area networks according to the destination IP address. Since the destination IP address is located in an IP segment of 10.1.2.150 to 10.1.2.200, while a virtual local area network corresponding to the IP segment of 10.1.2.150 to 10.1.2.200 is the VLAN 20, it can be known that the virtual local area network corresponding to the destination IP address of 10.1.2.180 is the VLAN 20.

Step 204: The layer 3 switch sends the packet to the obtained virtual local area network.

Step 205: The layer 3 switch sends the packet to all the virtual local area networks in the aggregated VLAN.

In the embodiment of the present invention, before the layer 3 switch sends a packet, with the implementation of the technical solutions that correspondence between IP address information and virtual local area networks is searched according to a destination Internet protocol (IP) address in the packet, and when a virtual local area network corresponding to the destination IP address is obtained by searching according to the destination IP address, the packet is sent to the virtual local area network, and otherwise, the packet is sent to all the virtual local area networks. The number of invalid packets sent by the layer 3 switch may be effectively reduced, and the sending performance of the packet in an aggregated VLAN scenario is improved, thereby reducing an influence of the invalid packets on the whole virtual local area network.

In the embodiment of the present invention, the IP address of the user device in each virtual local area network may be statically allocated by the network administrator, and may also be dynamically allocated by the layer 3 switch. Here, the layer 3 switch is a switch which has a DHCP (Dynamic Host Configuration Protocol, dynamic host configuration protocol) function.

The layer 3 switch dynamically allocates the IP address of the user device as follows:
First, the network administrator of the aggregated VLAN may designate one or more corresponding IP address pools for the aggregated VLAN and each virtual local area network in the aggregated VLAN, where IP addresses in the IP address pool may be a segment of continuous IP addresses; in addition, IP address information in the IP address pool which corresponds to the aggregated VLAN includes IP address information in the IP address pool which corresponds to each virtual local area network in the aggregated VLAN; and the layer 3 switch stores the correspondence which is between the IP address pools and the virtual local area networks and is configured by the network administrator.

Then, in a case that the layer 3 switch stores the correspondence which is between the IP address pools and the virtual local area networks and is configured by the network administrator, the user device applies for an IP address to the layer 3 switch, and the layer 3 switch allocates a corresponding IP address for the user device when receiving an application of the user device. The user device sends a DHCP DISCOVER (Discover packet) to the layer 3 switch, where the DHCP DISCOVER includes information of a virtual local area network where the user device is located; after receiving the DHCP DISCOVER, the layer 3 switch searches the correspondence between the IP address pools and the virtual local area networks according to the information of the virtual local area network where the user device is located, obtains an IP address pool corresponding to the virtual local area network where the user device is located, and selects an unoccupied IP address for the user device from the found IP address pool; and afterwards, the layer 3 switch returns a response packet DHCP OFFER (Offer packet) of the DHCP DISCOVER to the user device, where the DHCP OFFER packet is used to notify the user device of the allocated IP address, and the DHCP OFFER packet includes configuration information such as the IP address of the user device.

When IP address resources in the IP address pool, found by the layer 3 switch, corresponding to the virtual local area network, where the user device is located, are insufficient, an IP address which is unoccupied and is not in the IP address pools corresponding to another virtual local area network is selected for the user device from the IP address pool corresponding to the aggregated VLAN.

In addition, when the IP address pool corresponding to the virtual local area network where the user device is located cannot be obtained by searching the correspondence between the IP address pools and the virtual local area networks according to the information of the virtual local area network where the user device is located, an IP address which is unoccupied and is not in the IP address pools corresponding to another virtual local area network is selected for the user device from the IP address pool corresponding to the aggregated VLAN.

Referring to the networking which is of the aggregated VLAN connected by layer 3 switches and is shown in FIG. 2, an IP address pool allocated for the VLAN 10 by the network administrator is 10.1.1.2 to 10.1.1.100, IP address pools allocated for the VLAN 20 are 10.1.2.1 to 10.1.2.100 and 10.1.2.150 to 10.1.2.200, respectively, an IP address pool allocated for the VLAN 30 is 10.1.3.1 to 10.1.3.255, and an IP address pool allocated for the aggregated VLAN 100 is 10.1.1.1/16. For example, the user device 1 sends a DHCP DISCOVER message to a layer 3 switch 1, where the DHCP DISCOVER message includes identification information of the VLAN 20; after receiving the DHCP DISCOVER message, the layer 3 switch 1 searches the correspondence between the IP address pools and the virtual local area networks to obtain that the IP address pools corresponding to the VLAN 20 are 10.1.2.1 to 10.1.2.100 and 10.1.2.150 to 10.1.2.200, and then selects an unoccupied IP address, for example, 10.1.2.8, for the user device 1 from 10.1.2.1 to 10.1.2.100 and 10.1.2.150 to 10.1.2.200, and sends a DHCP OFFER message to the user device 1 to notify the user device 1 that its IP address is 10.1.2.8.

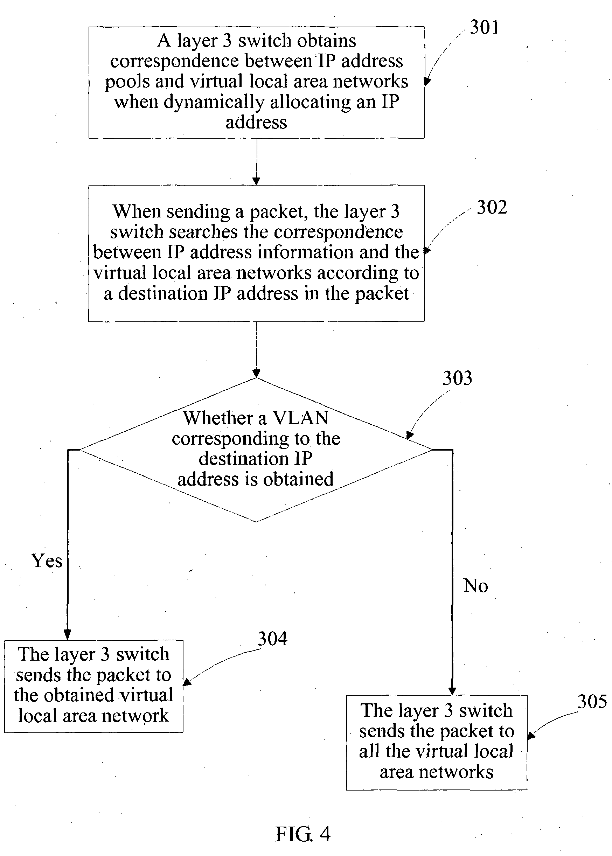

For a case that the IP address of the user device in the VLAN is dynamically allocated by the layer 3 switch, the embodiment of the present invention provides a method for sending a packet, and the method for sending the packet is applicable to the aggregated VLAN shown in FIG. 2. In addition, referring to FIG. 4, the following steps are included:
Step 301: A layer 3 switch which is configured with an aggregated VLAN obtains correspondence between IP address information and virtual local area networks. In the embodiment of the present invention, the correspondence between the IP address information and the virtual local area networks is correspondence between IP address pools and the virtual local area networks, and IP addresses in the IP address pool may be one or more segments of continuous IP addresses.

The obtaining, by the layer 3 switch, the correspondence between the IP address information and the virtual local area networks includes: configuring and saving the correspondence between the IP address pools and the virtual local area networks.

In specific implementation of this step, the layer 3 switch provides a configuration interface and provides a corresponding configuration command for the user, so that the user can configure the correspondence between the IP address pools and the virtual local area networks through the configuration command provided by the layer 3 switch; and through the configuration interface, the layer 3 switch receives the correspondence which is between the IP address pools and the virtual local area networks and is configured by the user, and saves the correspondence which is between the IP address pools and the virtual local area networks and is configured by the user. The user here mainly refers to the network administrator.

In the embodiment of the present invention, the correspondence which is between the IP address pools and the virtual local area networks and is configured by the user and is saved by the layer 3 switch may be shown in Table 2.

**Table 2: Correspondence between IP address pools and virtual local area networks**

| **IP Address Pool** | **Virtual Local Area Network** |
|---|---|
| 10.1.1.2 to 10.1.1.100 | VLAN 10 |
| 10.1.2.1 to 10.1.2.100 | VLAN 20 |
| 10.1.2.150 to 10.1.2.200 | |
| 10.1.3.1 to 10.1.3.100 | VLAN 30 |
| ... | ... |

In the embodiment of the present invention, the layer 3 switch allows the user to modify, for a second time, the correspondence between the IP address pools and the virtual local area networks, and at the same time, the layer 3 switch updates its saved correspondence between the IP address pools and the virtual local area networks according to the modification of the user.

Step 302: When sending a packet, the layer 3 switch searches the correspondence between the IP address information and the virtual local area networks according to a destination IP address in the packet.

The layer 3 switch determines an IP address pool to which the destination IP address belongs, and searches the correspondence between the IP address pools and the virtual local area networks according to the determined IP address pool.

Step 303: The layer 3 switch judges whether a virtual local area network corresponding to the destination IP address is obtained by searching the correspondence between the IP address information and the virtual local area networks according to the destination IP address in the packet.

If the virtual local area network corresponding to the destination IP address is obtained by searching the correspondence between the IP address information and the virtual local area networks according to the destination IP address, execute step 304.

If the virtual local area network corresponding to the destination IP address cannot be obtained by searching the correspondence between the IP address information and the virtual local area networks according to the destination IP address, execute step 305.

For example, if the packet forwarded by the layer 3 switch is an ARP request packet, and the destination IP address in the packet is 10.1.3.10, the layer 3 switch searches the stored correspondence between the IP address pools and the virtual local area networks according to the destination IP address. Since the destination IP address belongs to the IP address pool of 10.1.3.1 to 10.1.3.100, while the virtual local area network corresponding to the IP address pool of 10.1.3.1 to 10.1.3.100 is the VLAN 30, the virtual local area network corresponding to the destination IP address of 10.1.3.10 is the VLAN 30.

Step 304: The layer 3 switch sends the packet to the obtained virtual local area network.

Step 305: The layer 3 switch sends the packet to all the virtual local area networks in the aggregated VLAN.

In the embodiment of the present invention, before the layer 3 switch sends a packet, with the implementation of the technical solutions that correspondence between IP address information and virtual local area networks is searched according to a destination Internet protocol (IP) address in the packet, and when a virtual local area network corresponding to the destination IP address is obtained by searching according to the destination IP address, the packet is sent to the virtual local area network, and otherwise, the packet is sent to all the virtual local area networks, the number of invalid packets sent by the layer 3 switch may be effectively reduced, and the sending performance of the packet in the aggregated VLAN scenario is improved, thereby reducing the influence of the invalid packets on the whole virtual local area network.

In the embodiment of the present invention, the IP address of the user device in each virtual local area network may be dynamically allocated by the layer 3 switch, and may also be allocated by the DHCP (Dynamic Host Configuration Protocol, dynamic host configuration protocol) server.

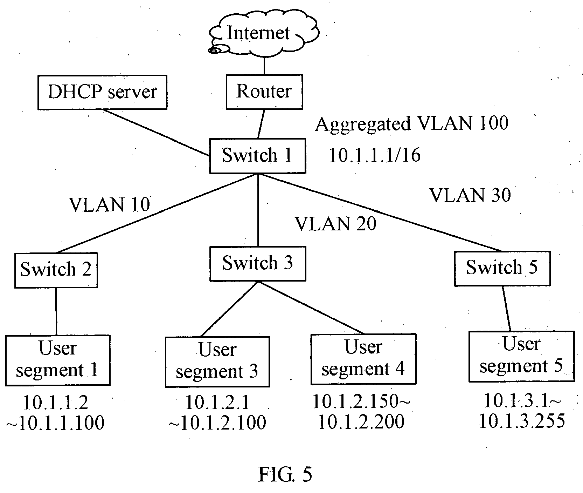

FIG. 5 is a schematic diagram of networking of an aggregated VLAN connected by layer 3 switches, which corresponds to the embodiment of the present invention. The networking of the aggregated VLAN shown in FIG. 5 is basically consistent with the networking of the aggregated VLAN shown in FIG. 2. A difference lies in that the layer 3 switch 1 in the networking of the aggregated VLAN shown in FIG. 5 is also connected with the DHCP server.

The DHCP server dynamically allocates the IP address for the user device as follows:
First, the network administrator of the aggregated VLAN may designate one or more corresponding IP address pools for the aggregated VLAN and each virtual local area network in the aggregated VLAN, where IP addresses in the IP address pool may be a segment of continuous IP addresses; in addition, IP address information in the IP address pool corresponding to the aggregated VLAN includes IP address information in the IP address pool corresponding to each virtual local area network in the aggregated VLAN; and the DHCP server stores the correspondence which is between the IP address pools and the virtual local area networks and is configured by the network administrator.

Then, in a case that the DHCP server stores the correspondence which is between the IP address pools and the virtual local area networks and is configured by the network administrator, the user device applies for an IP address to the DHCP server, and the DHCP server allocates a corresponding IP address for the user device when receiving the application of the user device. The user device sends a DHCP DISCOVER (Discover packet) to the DHCP server, where the DHCP DISCOVER includes information of the virtual local area network where the user device is located; after receiving the DHCP DISCOVER, the DHCP server searches the correspondence between the IP address pools and the virtual local area networks according to the information of the virtual local area network where the user device is located, obtains an IP address pool corresponding to the virtual local area network where the user device is located, and selects an unoccupied IP address for the user device from the found IP address pool; and afterwards, the DHCP server returns a response packet DHCP OFFER (Offer packet) of the DHCP DISCOVER to the user device, where the DHCP OFFER packet is used to notify the user device of the allocated IP address, and the DHCP OFFER packet includes configuration information such as the IP address of the user device.

When IP address resources in the IP address pool, found by the DHCP server, corresponding to the virtual local area network where the user device is located are insufficient, the DHCP server selects an IP address which is unoccupied and is not in the IP address pools corresponding to another virtual local area network for the user device from the IP address pool corresponding to the aggregated VLAN.

In addition, when the IP address pool corresponding to the virtual local area network where the user device is located cannot be obtained by searching the correspondence between the IP address pools and the virtual local area networks according to the information of the virtual local area network where the user device is located, the DHCP server selects an IP address which is unoccupied and is not in the IP address pools corresponding to another virtual local area network for the user device from the IP address pool corresponding to the aggregated VLAN.

Referring to the networking which is of the aggregated VLAN connected by layer 3 switches and is shown in FIG. 5, an IP address pool allocated for the VLAN 10 by the network administrator is 10.1.1.2 to 10.1.1.100, IP address pools allocated for the VLAN 20 are 10.1.2.1 to 10.1.2.100 and 10.1.2.150 to 10.1.2.200, respectively, an IP address pool allocated for the VLAN 30 is 10.1.3.1 to 10.1.3.255, and an IP address pool allocated for the aggregated VLAN 100 is 10.1.1.1/16. For example, a user device 1 sends a DHCP DISCOVER message to the DHCP server, where the DHCP DISCOVER message includes identification information of the VLAN 30, that is, the user device 1 belongs to the VLAN 30; after receiving the DHCP DISCOVER message, the DHCP server searches the correspondence between the IP address pools and the virtual local area networks to obtain that the IP address pool corresponding to the VLAN 30 is 10.1.3.1 to 10.1.3.255, and then selects an unoccupied IP address, for example, 10.1.3.8, for the user device 1 from 10.1.3.1 to 10.1.3.255, and sends a DHCP OFFER message to the user device 1 to notify the user device 1 that its IP address is 10.1.3.8.

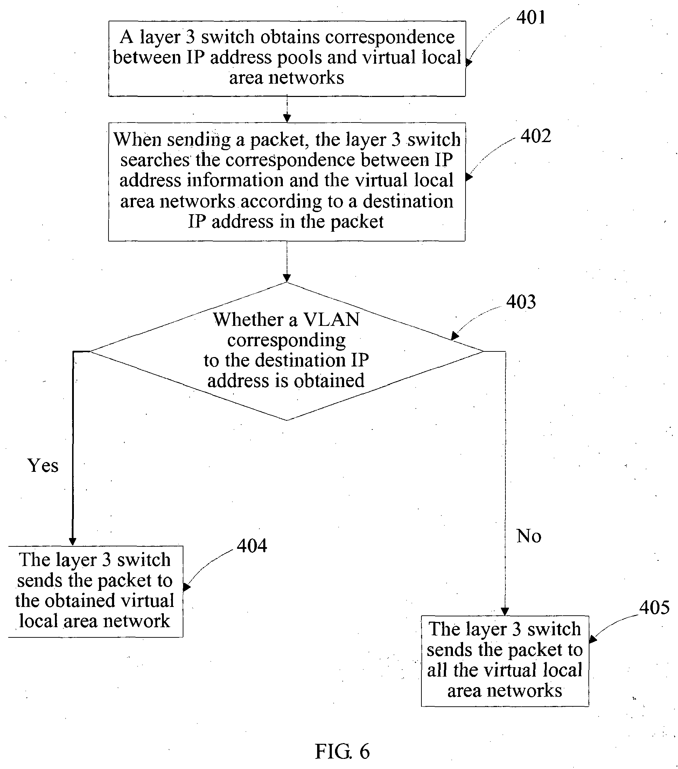

For a case that the IP address of the user device in the VLAN is dynamically allocated by the DHCP server, the embodiment of the present invention provides a method for sending a packet, and the method for sending the packet is applicable to the aggregated VLAN shown in FIG. 5. In addition, referring to FIG. 6, the following steps are included:
Step 401: The layer 3 switch which is configured with an aggregated VLAN obtains correspondence between IP address information and virtual local area networks. In the embodiment of the present invention, the correspondence between the IP address information and the virtual local area networks is correspondence between IP address pools and the virtual local area networks, and IP addresses in the IP address pool may be one or more segments of continuous IP addresses.

The obtaining, by the layer 3 switch, the correspondence between the IP address information and the virtual local area networks includes: obtaining, by the layer 3 switch, the correspondence between the IP address pools and the virtual local area networks from the DHCP server and saving the correspondence.

In specific implementation of this step, the layer 3 switch sends to the DHCP server a request for downloading the correspondence between the IP address pools and the virtual local area networks, where the DHCP server stores in advance the correspondence which is between the IP address pools and the virtual local area networks and is configured by the user, downloads the correspondence between the IP address pools and the virtual local area networks from the DHCP server, and saves the downloaded correspondence between the IP address pools and the virtual local area networks.

In the embodiment of the present invention, the DHCP server allows the user to modify, for a second time, the correspondence between the IP address pools and the virtual local area networks, and at the same time, the DHCP server may synchronize the correspondence which is between the IP address pools and the virtual local area networks and is obtained after the second modification to the layer 3 switch.

In the embodiment of the present invention, the correspondence which is between the IP address pools and the virtual local area networks and is saved by the layer 3 switch may be shown in Table 2.

Step 402: When sending a packet, the layer 3 switch searches the correspondence between the IP address information and the virtual local area networks according to a destination IP address in the packet.

The layer 3 switch determines an IP address pool to which the destination IP address belongs, and searches the correspondence between the IP address pools and the virtual local area networks according to the determined IP address pool.

Step 403: The layer 3 switch judges whether a virtual local area network corresponding to the destination IP address is obtained by searching the correspondence between the IP address information and the virtual local area networks according to the destination IP address in the packet.

If the virtual local area network corresponding to the destination IP address is obtained by searching the correspondence between the IP address information and the virtual local area networks according to the destination IP address, execute step 404.

If the virtual local area network corresponding to the destination IP address cannot be obtained by searching the correspondence between the IP address information and the virtual local area networks according to the destination IP address, execute step 405.

For example, if the packet forwarded by the layer 3 switch is an ARP request packet, and the destination IP address in the packet is 10.1.3.10, the layer 3 switch searches the stored correspondence between the IP address pools and the virtual local area networks according to the destination IP address. Since the destination IP address belongs to the IP address pool of 10.1.3.1 to 10.1.3.100, and the virtual local area network corresponding to the IP address pool of 10.1.3.1 to 10.1.3.100 is the VLAN 30, the virtual local area network corresponding to the destination IP address of 10.1.3.10 is the VLAN 30.

Step 404: The layer 3 switch sends the packet to the obtained virtual local area network.

Step 405: The layer 3 switch sends the packet to all the virtual local area networks in the aggregated VLAN.

In the embodiment of the present invention, before the layer 3 switch sends a packet, with the implementation of the technical solutions that information of virtual local area networks is searched through a destination IP address in the packet to obtain a virtual local area network corresponding to the destination IP address, and the packet is sent in the found virtual local area network, and otherwise, the packet is sent to all the virtual local area networks, the number of invalid packets sent by the layer 3 switch may be effectively reduced, and the sending performance of the packet in the aggregated VLAN scenario is improved, thereby reducing the influence of the invalid packets on the whole virtual local area network.

In the embodiment of the present invention, the IP address of the user device in each virtual local area network may be dynamically allocated by the layer 3 switch, and may also be allocated by the DHCP (Dynamic Host Configuration Protocol, dynamic host configuration protocol) server.

Referring to the schematic diagram which is of networking of the aggregated VLAN connected by layer 3 switches and is shown in FIG. 5, in the networking of the aggregated VLAN shown in FIG. 5, the user device applies for an IP address to the DHCP server, and the DHCP server allocates a corresponding IP address for the user device when receiving the application of the user device. The user device sends a DHCP DISCOVER (Discover packet) to the DHCP server; after receiving the DHCP DISCOVER, the DHCP server selects an unoccupied IP address for the user device from a preset IP address pool; and afterwards, the DHCP server returns a response packet DHCP OFFER (Offer packet) of the DHCP DISCOVER to the user device, where the DHCP OFFER packet includes configuration information such as the IP address of the user device.

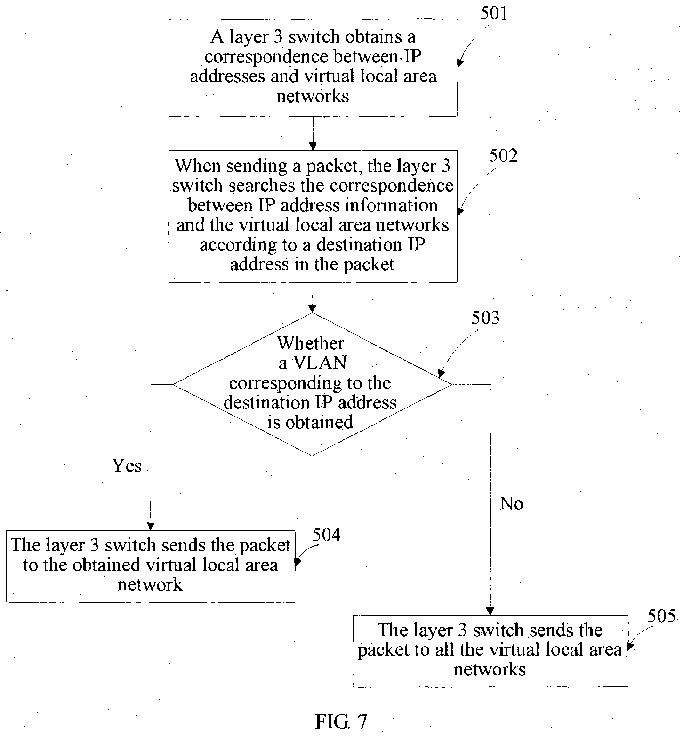

For the case that the IP address of the user device in the VLAN is dynamically allocated by the DHCP server, the embodiment of the present invention provides a method for sending a packet, and the method for sending a packet is applicable to the aggregated VLAN shown in FIG. 5. In addition, referring to FIG. 7, the following steps are included:
Step 501: A layer 3 switch which is configured with an aggregated VLAN obtains correspondence between IP address information and virtual local area networks. In the embodiment of the present invention, the correspondence between the IP address information and the virtual local area networks is correspondence between IP addresses and the virtual local area networks.

The obtaining, by the layer 3 switch, the correspondence between the IP address information and the virtual local area networks includes: intercepting, by the layer 3 switch, an Offer packet sent by the DHCP server, and obtaining the correspondence between the IP addresses and the virtual local area networks from the intercepted Offer packet and saving the correspondence.

In the embodiment of the present invention, the correspondence which is between the IP addresses and the virtual local area networks and is saved by the layer 3 switch may be shown in Table 3.

**Table 3: Correspondence between IP addresses and virtual local area networks**

| **IP Address** | **Virtual Local Area Network** |
|---|---|
| 10.1.1.2 | VLAN 10 |
| 10.1.1.100 | VLAN 10 |
| ... | ... |
| 10.1.2.1 | VLAN 20 |
| 10.1.2.10 | VLAN 20 |
| ... | ... |
| 10.1.3.5 | VLAN 30 |
| ... | ... |
| 10.1.3.250 | VLAN 30 |
| 10.1.3.1 | VLAN 30 |
| ... | ... |

Step 502: When sending a packet, the layer 3 switch searches the correspondence between the IP address information and the virtual local area networks according to a destination IP address in the packet.

The layer 3 switch searches the correspondence between the IP addresses and the virtual local area networks according to the destination IP address.

Step 503: The layer 3 switch judges whether a virtual local area network corresponding to the destination IP address is obtained by searching the correspondence between the IP address information and the virtual local area networks according to the destination IP address in the packet.

If the virtual local area network corresponding to the destination IP address is obtained by searching the correspondence between the IP address information and the virtual local area networks according to the destination IP address, execute step 504.

If the virtual local area network corresponding to the destination IP address cannot be obtained by searching the correspondence between the IP address information and the virtual local area networks according to the destination IP address, execute step 505.

For example, if the packet forwarded by the layer 3 switch is an ARP request packet, and the destination IP address in the packet is 10.1.3.10, the layer 3 switch searches the stored correspondence between the IP addresses and the virtual local area networks according to the destination IP address, for example, the virtual local area network corresponding to the destination IP address of 10.1.3.10 is the VLAN 30.

Step 504: The layer 3 switch sends the packet to the obtained virtual local area network.

Step 505: The layer 3 switch sends the packet to all the virtual local area networks in the aggregated VLAN.

In the embodiment of the present invention, before the layer 3 switch sends a packet, with the implementation of the technical solutions that correspondence between IP address information and virtual local area networks is searched according to a destination Internet protocol (IP) address in the packet, and when a virtual local area network corresponding to the destination IP address is obtained by searching according to the destination IP address, the packet is sent to the virtual local area network, and otherwise, the packet is sent to all the virtual local area networks, the number of invalid packets sent by the layer 3 switch may be effectively reduced, and the sending performance of the packet in the aggregated VLAN scenario is improved, thereby reducing the influence of the invalid packets on the whole virtual local area network.

### Embodiment 3

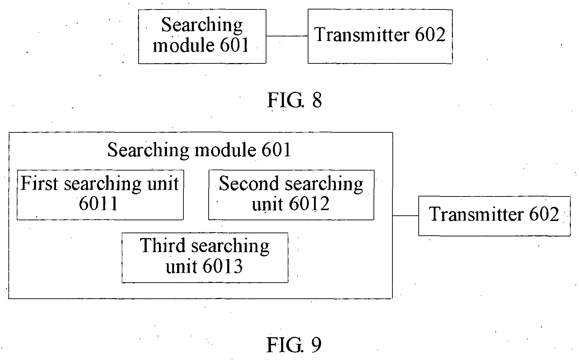

Referring to FIG. 8, a switch is shown. The switch is the same as a layer 3 switch in Method Embodiment 2, the switch is configured with an aggregated VLAN and includes a searching module 601 and a transmitter 602.

The searching module 601 is configured to, when sending a packet, search correspondence between IP address information and virtual local area networks according to a destination Internet protocol (IP) address in the packet.

The transmitter 602 is configured to, if the searching module 601 obtains a virtual local area network corresponding to the destination IP address by searching the correspondence between the IP address information and the virtual local area networks according to the destination IP address in the packet, send the packet to the virtual local area network, and if the searching module 601 cannot obtain the virtual local area network corresponding to the destination IP address by searching the correspondence between the IP address information and the virtual local area networks according to the destination IP address in the packet, send the packet to all the virtual local area networks in the aggregated VLAN.

Referring to FIG. 9, the searching module 601 may include:
a first searching unit 6011, configured to, when the IP address information is an IP address segment, determine an IP address segment to which the destination IP address belongs, and search correspondence between IP address segments and the virtual local area networks according to the determined IP address segment; or
a second searching unit 6012, configured to, when the IP address information is an IP address pool, determine an IP address pool to which the destination IP address belongs, and search correspondence between IP address pools and the virtual local area networks according to the determined IP address pool; or
a third searching unit 6013, configured to, when the IP address information is an IP address, search correspondence between IP addresses and the virtual local area networks according to the destination IP address.

In the embodiment of the present invention, a network administrator of an aggregated VLAN may statically configure one or more corresponding IP network segments for the aggregated VLAN and each virtual local area network in the aggregated VLAN, where the IP network segment corresponding to the aggregated VLAN includes the IP network segment corresponding to each virtual local area network in the aggregated VLAN. In a case of statically configuring the IP network segment in the foregoing, when a user device joins a certain VLAN, the network administrator may select an unoccupied IP address from the IP network segment corresponding to the VLAN and statically allocate the IP address to the newly joined user device.

For the case that the IP address of the user device in the VLAN is statically allocated, the switch in the embodiment of the present invention further includes a first obtaining module, which is configured to configure and save the correspondence between the IP address segments and the virtual local area networks.

In the embodiment of the present invention, the IP address of the user device in each virtual local area network may be statically allocated by the network administrator, and may also be dynamically allocated by the layer 3 switch. The layer 3 switch is a switch which has a DHCP (Dynamic Host Configuration Protocol, dynamic host configuration protocol) function. The layer 3 switch dynamically allocates the IP address of the user device as follows.

First, the network administrator of the aggregated VLAN may designate one or more corresponding IP address pools for the aggregated VLAN and each virtual local area network in the aggregated VLAN, where IP addresses in the IP address pool may be a segment of continuous IP addresses; in addition, IP address information in the IP address pool corresponding to the aggregated VLAN includes IP address information in the IP address pool corresponding to each virtual local area network in the aggregated VLAN; and the layer 3 switch stores the correspondence which is between the IP address pools and the virtual local area networks and is configured by the network administrator. Then, in a case that the layer 3 switch stores the correspondence which is between the IP address pools and the virtual local area networks and is configured by the network administrator, the user device applies for an IP address to the layer 3 switch, and the layer 3 switch allocates a corresponding IP address for the user device when receiving the application of the user device. The user device sends a DHCP DISCOVER (Discover packet) to the layer 3 switch, where the DHCP DISCOVER includes information of the virtual local area network where the user device is located; after receiving the DHCP DISCOVER, the layer 3 switch searches the correspondence between the IP address pools and the virtual local area networks according to the information of the virtual local area network where the user device is located, obtains an IP address pool corresponding to the virtual local area network where the user device is located, and selects an unoccupied IP address for the user device from the found IP address pool; and afterwards, the layer 3 switch returns a response packet DHCP OFFER (Offer packet) of the DHCP DISCOVER to the user device, where the DHCP OFFER packet is used to notify the user device of the allocated IP address, and the DHCP OFFER packet includes configuration information such as the IP address of the user device.

For the case that the IP address of the user device in the VLAN is dynamically allocated by the layer 3 switch, the switch in the embodiment of the present invention further includes a second obtaining module, which is configured to configure and save the correspondence between the IP address pools and the virtual local area networks.

In the embodiment of the present invention, the IP address of the user device in each virtual local area network may be dynamically allocated by the layer 3 switch, and may also be allocated by a DHCP (Dynamic Host Configuration Protocol, dynamic host configuration protocol) server.

FIG. 5 is a schematic diagram of networking of an aggregated VLAN connected by layer 3 switches, which is corresponding to the embodiment of the present invention. The networking of the aggregated VLAN shown in FIG. 5 is basically consistent with the networking of the aggregated VLAN shown in FIG. 2. A difference lies in that, a layer 3 switch 1 in the networking of the aggregated VLAN shown in FIG. 5 is also connected with the DHCP server.

The DHCP server dynamically allocates the IP address for the user device as follows.

First, the network administrator of the aggregated VLAN may designate one or more corresponding IP address pools for the aggregated VLAN and each virtual local area network in the aggregated VLAN, where IP addresses in the IP address pool may be a segment of continuous IP addresses; in addition, IP address information in the IP address pool corresponding to the aggregated VLAN includes IP address information in the IP address pool corresponding to each virtual local area network in the aggregated VLAN; and the DHCP server stores the correspondence which is between the IP address pools and the virtual local area networks and is configured by the network administrator.

Then, in the case that the DHCP server stores the correspondence which is between the IP address pools and the virtual local area networks and is configured by the network administrator, the user device applies for an IP address to the DHCP server, and the DHCP server allocates a corresponding IP address for the user device when receiving the application of the user device. The user device sends a DHCP DISCOVER (Discover packet) to the DHCP server, where the DHCP DISCOVER includes information of the virtual local area network where the user device is located; after receiving the DHCP DISCOVER, the DHCP server searches the correspondence between the IP address pools and the virtual local area networks according to the information of the virtual local area network where the user device is located, obtains an IP address pool corresponding to the virtual local area network where the user device is located, and selects an unoccupied IP address for the user device from the found IP address pool; and afterwards, the DHCP server returns a response packet DHCP OFFER (Offer packet) of the DHCP DISCOVER to the user device, where the DHCP OFFER packet is used to notify the user device of the allocated IP address, and the DHCP OFFER packet includes configuration information such as the IP address of the user device.

For the case that the IP address of the user device in the VLAN is dynamically allocated by the DHCP server, the switch in the embodiment of the present invention further includes the second obtaining module, which is further configured to obtain the correspondence between the IP address pools and the virtual local area networks from the dynamic host configuration protocol server and save the correspondence.

In the embodiment of the present invention, the IP address of the user device in each virtual local area network may be dynamically allocated by the layer 3 switch, and may also be allocated by the DHCP (Dynamic Host Configuration Protocol, dynamic host configuration protocol) server.

Referring to the schematic diagram which is of networking of the aggregated VLAN connected by layer 3 switches and is shown in FIG. 5, in the networking of the aggregated VLAN shown in FIG. 5, the user device applies for an IP address to the DHCP server, and the DHCP server allocates a corresponding IP address for the user device when receiving the application of the user device. The user device sends a DHCP DISCOVER (Discover packet) to the DHCP server; after receiving the DHCP DISCOVER, the DHCP server selects an unoccupied IP address for the user device from a preset IP address pool; and afterwards, the DHCP server returns a response packet DHCP OFFER (Offer packet) of the DHCP DISCOVER to the user device, where the DHCP OFFER packet includes configuration information such as the IP address of the user device.

For the case that the IP address of the user device in the VLAN is dynamically allocated by the DHCP server, the switch in the embodiment of the present invention further includes a third obtaining module, which is configured to intercept an Offer packet sent by the dynamic host configuration protocol server, and obtain the correspondence between the IP addresses and the virtual local area networks from the Offer packet and save the correspondence.

In the embodiments of the present invention, with the implementation of the technical solutions that correspondence between IP address information and virtual local area networks is searched according to a destination Internet protocol (IP) address of a packet, and when a virtual local area network corresponding to the destination IP address is obtained by searching according to the destination IP address, the packet is sent to the virtual local area network, and otherwise, the packet is sent to all the virtual local area networks, the number of invalid packets that are sent may be effectively reduced, and the sending performance of the packet in the aggregated VLAN scenario is improved, thereby reducing the influence of the invalid packets on the whole virtual local area network.

Persons of ordinary skill in the art may understand that all or a part of the steps of the foregoing embodiments may be implemented through hardware, and may also be implemented by a program instructing relevant hardware. The program may be stored in a computer readable storage medium. The foregoing-mentioned storage medium may be a read-only memory, a magnetic disk, or a compact disk.

The foregoing description is only exemplary embodiments of the present invention and is not intended to limit the present invention. Any modification, equivalent replacement, or improvement made within the principle of the present invention shall fall within the protection scope of the present invention.

## Claims

1. A method for sending an address resolution protocol, ARP, request packet, wherein the method is performed by a layer 3 switch configured with an aggregated virtual local area network, VLAN, the aggregated VLAN has a VLAN identifier, VLAN ID, and contains a plurality of VLANs, and the method comprises:
searching (101, 202, 302, 402, 502) correspondence between IP address information and the VLANs in the aggregated VLAN according to a destination Internet protocol, IP, address in an ARP request packet, so as to determine if there is a VLAN in the aggregated VLAN that corresponds to the destination IP address;
if a VLAN in the aggregated VLAN that corresponds to the destination IP address is obtained, sending (102, 204, 304, 404, 504) the ARP request packet to only the obtained VLAN in the aggregated VLAN;
if a VLAN in the aggregated VLAN that corresponds to the destination IP address cannot be obtained, sending (103, 205, 305, 405, 505) the ARP request packet to all VLANs in the aggregated VLAN.

2. The method according to claim 1, wherein the IP address information comprises an IP address segment, and the searching the correspondence between the IP address information and the VLANs in the aggregated VLAN according to the destination IP address in the ARP request packet comprises:
determining an IP address segment to which the destination IP address belongs, and searching correspondence between IP address segments and the VLANs in the aggregated VLAN according to the determined IP address segment.

3. The method according to claim 1, wherein the IP address information comprises an IP address pool, and the searching the correspondence between the IP address information and the VLANs in the aggregated VLAN according to the destination IP address in the ARP request packet comprises:
determining an IP address pool to which the destination IP address belongs, and searching correspondence between IP address pools and the VLANs in the aggregated VLAN according to the determined IP address pool.

4. The method according to claim 1, wherein the IP address information comprises an IP address, and the searching the correspondence between the IP address information and the VLANs in the aggregated VLAN according to the destination IP address in the ARP request packet comprises:
searching correspondence between IP addresses and the VLANs in the aggregated VLAN according to the destination IP address.

5. The method according to claim 2, wherein before the searching the correspondence between the IP address segments and the VLANs in the aggregated VLAN according to the determined IP address segment, the method further comprises:
configuring and saving the correspondence between the IP address segments and the VLANs in the aggregated VLAN.

6. The method according to claim 3, wherein before the searching the correspondence between the IP address pools and the VLANs in the aggregated VLAN according to the determined IP address pool, the method further comprises:
obtaining the correspondence between the IP address pools and the VLANs in the aggregated VLAN from a dynamic host configuration protocol server and saving the correspondence.

7. The method according to claim 4, wherein before the searching the correspondence between the IP addresses and the VLANs in the aggregated VLAN according to the destination IP address, the method further comprises:
intercepting an Offer packet sent by a dynamic host configuration protocol server, and obtaining the correspondence between the IP addresses and the VLANs in the aggregated VLAN from the Offer packet and saving the correspondence.

8. A layer 3 switch, wherein the switch comprises a searching module (601) and a transmitter (602), wherein the switch is configured with an aggregated virtual local area network, VLAN, the aggregated VLAN has a VLAN identifier, VLAN ID, and contains a plurality of VLANs,
the searching module is configured to, search correspondence between IP address information and the VLANs in the aggregated VLAN according to a destination Internet protocol, IP, address in an address resolution protocol, ARP, request packet, so as to determine if there is a VLAN in the aggregated VLAN that corresponds to the destination IP address; and
the transmitter is configured to, if the searching module obtains a VLAN in the aggregated VLAN that corresponds to the destination IP address, send the ARP request packet to only the obtained VLAN in the aggregated VLAN; and if a VLAN in the aggregated VLAN that corresponds to the destination IP address cannot be obtained, sending the ARP request packet to all VLANs in the aggregated VLAN.

9. The switch according to claim 8, wherein the searching module comprises:
a first searching unit (6011), configured to, when the IP address information is an IP address segment, determine an IP address segment to which the destination IP address belongs, and search correspondence between IP address segments and the VLANs in the aggregated VLAN according to the determined IP address segment.

10. The switch according to claim 8, wherein the searching module comprises:
a second searching unit (6012), configured to, when the IP address information is an IP address pool, determine an IP address pool to which the destination IP address belongs, and search correspondence between IP address pools and the VLANs in the aggregated VLAN according to the determined IP address pool.

11. The switch according to claim 8, wherein the searching module comprises:
a third searching unit (6013), configured to, when the IP address information is an IP address, search correspondence between IP addresses and the VLANs in the aggregated VLAN according to the destination IP address.

12. The switch according to claim 9, further comprising:
a first obtaining module, configured to configure and save the correspondence between the IP address segments and the VLANs in the aggregated VLAN.

13. The switch according to claim 10, further comprising:
a second obtaining module, configured to obtain the correspondence between the IP address pools and the VLANs in the aggregated VLAN from a dynamic host configuration protocol server and save the correspondence.

14. The switch according to claim 11, further comprising:
a third obtaining module, configured to intercept an Offer packet sent by a dynamic host configuration protocol server, and obtain the correspondence between the IP addresses and the VLANs in the aggregated VLAN from the Offer packet and save the correspondence.

## Patentansprüche

1. Verfahren zum Senden eines "Address Resolution Protocol"- (ARP)-Anforderungspakets, wobei das Verfahren durch einen Schicht-3-Switch ausgeführt wird, der mit einem zusammengefassten virtuellen lokalen Netzwerk (VLAN) konfiguriert ist, das zusammengefasste VLAN eine VLAN-Kennung (VLAN ID) aufweist und eine Vielzahl von VLANs enthält, und das Verfahren die folgenden Schritte aufweist:
Suchen (101, 202, 302, 402, 502) nach einer Entsprechung zwischen IP-Adressen-Informationen und den VLANs im zusammengefassten VLAN gemäß einer Ziel-Internetprotokoll- (IP)-Adresse in einem ARP-Anforderungspaket, um festzustellen, ob es ein VLAN im zusammengefassten VLAN gibt, das der Ziel-IP-Adresse entspricht;
wenn ein VLAN im zusammengefassten VLAN, das der Ziel-IP-Adresse entspricht, beschafft wird, Senden (102, 204, 304, 404, 504) des ARP-Anforderungspakets nur an das beschaffte VLAN im zusammengefassten VLAN;
wenn kein VLAN im zusammengefassten VLAN, das der Ziel-IP-Adresse entspricht, beschafft werden kann, Senden (103, 205, 305, 405, 505) des ARP-Anforderungspakets an alle VLANs im zusammengefassten VLAN.

2. Verfahren nach Anspruch 1, wobei die IP-Adressen-Informationen ein IP-Adressensegment aufweisen und das Suchen nach der Entsprechung zwischen den IP-Adressen-Informationen und den VLANs im zusammengefassten VLAN gemäß der Ziel-IP-Adresse im ARP-Anforderungspaket aufweist:
Feststellen eines IP-Adressensegments, zu dem die Ziel-IP-Adresse gehört, und Suchen nach einer Entsprechung zwischen IP-Adressensegmenten und den VLANs im zusammengefassten VLAN gemäß dem festgestellten IP-Adressensegment.

3. Verfahren nach Anspruch 1, wobei die IP-Adressen-Informationen einen IP-Adressenpool aufweisen und das Suchen nach der Entsprechung zwischen den IP-Adressen-Informationen und den VLANs im zusammengefassten VLAN gemäß der Ziel-IP-Adresse im ARP-Anforderungspaket aufweist:
Feststellen eines IP-Adressenpools, zu dem die Ziel-IP-Adresse gehört, und Suchen nach einer Entsprechung zwischen IP-Adressenpools und den VLANs im zusammengefassten VLAN gemäß dem festgestellten IP-Adressenpool.

4. Verfahren nach Anspruch 1, wobei die IP-Adressen-Informationen eine IP-Adresse aufweisen und das Suchen nach der Entsprechung zwischen den IP-Adressen-Informationen und den VLANs im zusammengefassten VLAN gemäß der Ziel-IP-Adresse im ARP-Anforderungspaket aufweist:
Suchen nach einer Entsprechung zwischen IP-Adressen und den VLANs im zusammengefassten VLAN gemäß der Ziel-IP-Adresse.

5. Verfahren nach Anspruch 2, wobei vor dem Suchen nach der Entsprechung zwischen den IP-Adressensegmenten und den VLANs im zusammengefassten VLAN gemäß dem festgestellten IP-Adressensegment das Verfahren ferner aufweist:
Konfigurieren und Speichern der Entsprechung zwischen den IP-Adressensegmenten und den VLANs im zusammengefassten VLAN.

6. Verfahren nach Anspruch 3, wobei vor dem Suchen nach der Entsprechung zwischen den IP-Adressenpools und den VLANs im zusammengefassten VLAN gemäß dem festgestellten IP-Adressenpool das Verfahren ferner aufweist:
Beschaffen der Entsprechung zwischen den IP-Adressenpools und den VLANs im zusammengefassten VLAN von einem "Dynamic Host Configuration Protocol"-Server und Speichern der Entsprechung.

7. Verfahren nach Anspruch 4, wobei vor dem Suchen nach der Entsprechung zwischen den IP-Adressen und den VLANs im zusammengefassten VLAN gemäß der Ziel-IP-Adresse das Verfahren ferner aufweist:
Abfangen eines durch einen "Dynamic Host Configuration Protocol"-Server gesendeten Offer-Pakets und Beschaffen der Entsprechung zwischen den IP-Adressen und den VLANs im zusammengefassten VLAN aus dem Offer-Paket und Speichern der Entsprechung.

8. Schicht-3-Switch, wobei der Switch ein Suchmodul (601) und einen Transmitter (602) aufweist, wobei der Switch mit einem zusammengefassten virtuellen lokalen Netzwerk (VLAN) konfiguriert ist, das zusammengefasste VLAN eine VLAN-Kennung (VLAN ID) aufweist und eine Vielzahl von VLANs enthält,
das Suchmodul konfiguriert ist, nach einer Entsprechung zwischen IP-Adressen-Informationen und den VLANs im zusammengefassten VLAN gemäß einer Ziel-Internetprotokoll- (IP)-Adresse in einem "Address Resolution Protocol"- (ARP)- Anforderungspaket zu suchen, um festzustellen, ob es ein VLAN im zusammengefassten VLAN gibt, das der Ziel-IP-Adresse entspricht; und
der Transmitter konfiguriert ist, wenn das Suchmodul ein VLAN im zusammengefassten VLAN erhält, das der Ziel-IP-Adresse entspricht, das ARP-Anforderungspaket nur an das beschaffte VLAN im zusammengefassten VLAN zu senden; und wenn kein VLAN im zusammengefassten VLAN, das der Ziel-IP-Adresse entspricht, beschafft werden kann, das ARP-Anforderungspaket an alle VLANs im zusammengefassten VLAN zu senden.

9. Switch nach Anspruch 8, wobei das Suchmodul aufweist:
eine erste Sucheinheit (6011), die konfiguriert ist, wenn die IP-Adressen-Informationen ein IP-Adressensegment sind, ein IP-Adressensegment festzustellen, zu dem die Ziel-IP-Adresse gehört, und nach einer Entsprechung zwischen IP-Adressensegmenten und den VLANs im zusammengefassten VLAN gemäß dem festgestellten IP-Adressensegment zu suchen.

10. Switch nach Anspruch 8, wobei das Suchmodul aufweist:
eine zweite Sucheinheit (6012), die konfiguriert ist, wenn die IP-Adressen-Informationen ein IP-Adressenpool sind, einen IP-Adressenpool festzustellen, zu dem die Ziel-IP-Adresse gehört, und nach einer Entsprechung zwischen IP-Adressenpools und den VLANs im zusammengefassten VLAN gemäß dem festgestellten IP-Adressenpool zu suchen.

11. Switch nach Anspruch 8, wobei das Suchmodul aufweist:
eine dritte Sucheinheit (6013), die konfiguriert ist, wenn die IP-Adressen-Informationen eine IP-Adresse sind, nach einer Entsprechung zwischen IP-Adressen und den VLANs im zusammengefassten VLAN gemäß der Ziel-IP-Adresse zu suchen.

12. Switch nach Anspruch 9, der ferner aufweist:
ein erstes Beschaffungsmodul, das konfiguriert ist, die Entsprechung zwischen den IP-Adressensegmenten und den VLANs im zusammengefassten VLAN zu konfigurieren und zu speichern.

13. Switch nach Anspruch 10, der ferner aufweist:
ein zweites Beschaffungsmodul, das konfiguriert ist, die Entsprechung zwischen den IP-Adressenpools und den VLANs im zusammengefassten VLAN von einem "Dynamic Host Configuration Protocol"-Server zu beschaffen und die Entsprechung zu speichern.

14. Switch nach Anspruch 11, der ferner aufweist:
ein drittes Beschaffungsmodul, das konfiguriert ist, ein durch einen "Dynamic Host Configuration Protocol"-Server gesendetes Offer-Paket abzufangen, und die Entsprechung zwischen den IP-Adressen und den VLANs im zusammengefassten VLAN aus dem Offer-Paket zu beschaffen und die Entsprechung zu speichern.

## Revendications

1. Procédé pour envoyer un paquet de demande de protocole de résolution d'adresse, ARP, dans lequel le procédé est exécuté par un commutateur de couche 3 configuré avec un réseau local virtuel, VLAN, agrégé, le réseau VLAN agrégé a un identifiant VLAN, VLAN ID, et contient une pluralité de réseaux VLAN, et le procédé comprend les étapes suivantes :
rechercher (101, 202, 302, 402, 502) une correspondance entre des informations d'adresse IP et les réseaux VLAN dans le réseau VLAN agrégé selon une adresse de protocole Internet, IP, de destination dans un paquet de demande ARP afin de déterminer s'il y a un réseau VLAN dans le VLAN agrégé qui correspond à l'adresse IP de destination ;
si un réseau VLAN dans le VLAN agrégé qui correspond à l'adresse IP de destination est obtenu, envoyer (102, 204, 304, 404, 504) le paquet de demande ARP à uniquement le réseau VLAN obtenu dans le VLAN agrégé ;
si un réseau VLAN dans le VLAN agrégé qui correspond à l'adresse IP de destination ne peut pas être obtenu, envoyer (103, 205, 305, 405, 505) le paquet de demande ARP à tous les réseaux VLAN contenus dans le VLAN agrégé.

2. Procédé selon la revendication 1, dans lequel les informations d'adresse IP comprennent un segment d'adresse IP, et la recherche de la correspondance entre les informations d'adresse IP et les réseaux VLAN contenus dans le VLAN agrégé selon l'adresse IP de destination dans le paquet de demande ARP comprend les étapes suivantes :
déterminer un segment d'adresse IP auquel l'adresse IP de destination appartient, et rechercher une correspondance entre des segments d'adresse IP et les réseaux VLAN contenus dans le VLAN agrégé selon le segment d'adresse IP déterminé.

3. Procédé selon la revendication 1, dans lequel les informations d'adresse IP comprennent un groupe d'adresses IP, et la recherche de la correspondance entre les informations d'adresse IP et les réseaux VLAN contenus dans le VLAN agrégé selon l'adresse IP de destination dans le paquet de demande ARP comprend les étapes suivantes :
déterminer un groupe d'adresses IP auquel l'adresse IP de destination appartient, et rechercher une correspondance entre des groupes d'adresses IP et les réseaux VLAN contenus dans le VLAN agrégé selon le groupe d'adresses IP déterminé.

4. Procédé selon la revendication 1, dans lequel les informations d'adresse IP comprennent une adresse IP, et la recherche de la correspondance entre les informations d'adresse IP et les réseaux VLAN contenus dans le VLAN agrégé selon l'adresse IP de destination dans le paquet de demande ARP comprend l'étape suivante :
rechercher une correspondance entre des adresses IP et les réseaux VLAN contenus dans le VLAN agrégé selon l'adresse IP de destination.

5. Procédé selon la revendication 2, dans lequel, avant la recherche de la correspondance entre les segments d'adresse IP et les réseaux VLAN contenus dans le VLAN agrégé selon le segment d'adresse IP déterminé, le procédé comprend en outre les étapes suivantes :
configurer et sauvegarder la correspondance entre les segments d'adresse IP et les réseaux VLAN contenus dans le VLAN agrégé.

6. Procédé selon la revendication 3, dans lequel, avant la recherche de la correspondance entre les groupes d'adresses IP et les réseaux VLAN contenus dans le VLAN agrégé selon le groupe d'adresses IP déterminé, le procédé comprend en outre les étapes suivantes :
obtenir la correspondance entre les groupes d'adresses IP et les réseaux VLAN contenus dans le VLAN agrégé à partir d'un serveur de protocole de configuration d'hôte dynamique et sauvegarder la correspondance.

7. Procédé selon la revendication 4, dans lequel, avant la recherche de la correspondance entre les adresses IP et les réseaux VLAN contenus dans le VLAN agrégé selon l'adresse IP de destination, le procédé comprend en outre les étapes suivantes :
intercepter un paquet d'offre envoyé par un serveur de protocole de configuration d'hôte dynamique, et obtenir la correspondance entre les adresses IP et les réseaux VLAN contenus dans le VLAN agrégé à partir du paquet d'offre, et sauvegarder la correspondance.

8. Commutateur de couche 3, dans lequel le commutateur comprend un module de recherche (601) et un émetteur (602), où le commutateur est configuré avec un réseau local virtuel, VLAN, agrégé, le réseau VLAN agrégé a un identifiant VLAN, VLAN ID, et contient une pluralité de réseaux VLAN,
le module de recherche est configuré pour rechercher une correspondance entre des informations d'adresse IP et les réseaux VLAN dans le réseau VLAN agrégé selon une adresse de protocole Internet, IP, de destination dans un paquet de demande de protocole de résolution d'adresse, ARP, afin de déterminer s'il y a un réseau VLAN dans le VLAN agrégé qui correspond à l'adresse IP de destination ; et
l'émetteur est configuré, si le module de recherche obtient un réseau VLAN dans le VLAN agrégé qui correspond à l'adresse IP de destination, pour envoyer le paquet de demande ARP à uniquement le réseau VLAN obtenu dans le VLAN agrégé ; et si un réseau VLAN dans le VLAN agrégé qui correspond à l'adresse IP de destination ne peut pas être obtenu, pour envoyer le paquet de demande ARP à tous les réseaux VLAN contenus dans le VLAN agrégé.

9. Commutateur selon la revendication 8, dans lequel le module de recherche comprend :
une première unité de recherche (6011), configurée, lorsque les informations d'adresse IP sont un segment d'adresse IP, pour déterminer un segment d'adresse IP auquel l'adresse IP de destination appartient, et pour rechercher une correspondance entre des segments d'adresse IP et les réseaux VLAN contenus dans le VLAN agrégé selon le segment d'adresse IP déterminé.

10. Commutateur selon la revendication 8, dans lequel le module de recherche comprend :
une deuxième unité de recherche (6012), configurée, lorsque les informations d'adresse IP sont un groupe d'adresses IP, pour déterminer un groupe d'adresses IP auquel l'adresse IP de destination appartient, et pour rechercher une correspondance entre des groupes d'adresses IP et les réseaux VLAN contenus dans le VLAN agrégé selon le groupe d'adresses IP déterminé.

11. Commutateur selon la revendication 8, dans lequel le module de recherche comprend :
une troisième unité de recherche (6013), configurée, lorsque les informations d'adresse IP sont une adresse IP, pour rechercher une correspondance entre des adresses IP et les réseaux VLAN contenus dans le VLAN agrégé selon l'adresse IP de destination.

12. Commutateur selon la revendication 9, comprenant en outre :
un premier module d'obtention, configuré pour configurer et sauvegarder la correspondance entre les segments d'adresse IP et les réseaux VLAN contenus dans le VLAN agrégé.

13. Commutateur selon la revendication 10, comprenant en outre :
un deuxième module d'obtention, configuré pour obtenir la correspondance entre les groupes d'adresses IP et les réseaux VLAN contenus dans le VLAN agrégé à partir d'un serveur de protocole de configuration d'hôte dynamique et pour sauvegarder la correspondance.

14. Commutateur selon la revendication 11, comprenant en outre :
un troisième module d'obtention, configuré pour intercepter un paquet d'offre envoyé par un serveur de protocole de configuration d'hôte dynamique, et pour obtenir la correspondance entre les adresses IP et les réseaux VLAN contenus dans le VLAN agrégé à partir du paquet d'offre et sauvegarder la correspondance.
